(19) Europäisches Patentamt
European Patent Office
Office européen des brevets

(11) Publication number: **0 473 246 A1**

# EUROPEAN PATENT APPLICATION

(21) Application number: **91301025.2**

(22) Date of filing: **07.02.91**

(51) Int. Cl.5: **H01H 71/00, H01H 83/20**

(30) Priority: **30.08.90 GB 9018912**

(43) Date of publication of application:
**04.03.92 Bulletin 92/10**

(84) Designated Contracting States:
**AT BE CH DE DK ES FR GB GR IT LI LU NL SE**

(71) Applicant: **MK ELECTRIC LIMITED**
**Shrubbery Road**
**Edmonton London N9 0PB(GB)**

(72) Inventor: **Mullins, Malcolm Howard**
**69 Station Road**
**Willingham, Cambridgeshire, CB4 5HG(GB)**
Inventor: **Snowball, Malcolm R.**
**"Woodside", 4 The Gables**
**The Plain, Epping, Essex. CM16 6TW(GB)**
Inventor: **Latham, Frank**
**5 Rickyard Meadow**
**Redbourn, Hertfordshire, AL3 7HT(GB)**

(74) Representative: **Adams, William Gordon et al**
**RAWORTH, MOSS & COOK 36 Sydenham**
**Road**
**Croydon Surrey CR0 2EF(GB)**

(54) **Improvements in or relating to electrical control apparatus.**

(57) An electrical control apparatus operable to respond to an external parameter to control a power supply comprises a neutral phase module incorporating a circuit breaker and a line phase module incorporating a circuit breaker. Means responsive to a first electric signal is arranged to trip the circuit breaker of the line phase module to interrupt the phase line. An electronics module incorporating means responsive to a second electric signal to produce a mechanical displacement. The modules are electrically and mechanically connected whereby the tripping of the line phase circuit breaker is mechanically transmitted to the neutral module and the electronics module and the mechanical displacement in the electronics module is mechanically transmitted to the neutral module and the phase module to interrupt the neutral and phase lines connected thereto.

*FIG.4*

This invention relates to electrical control apparatus and is particularly concerned with such apparatus intended to respond to an external parameter to control an electrical power supply.

Electrical control apparatus is, in many cases, tailored and manufactured to suit the intended application. This involves a high degree of expertise and manufacturing expense.

It is an object of the present invention to provide a minimum number of different standard modules which can be electrically and mechanically connected in a variety of configurations to provide control apparatus suitable for a great number of industrial applications.

According to the present invention there is provided an electrical control apparatus operable to respond to an external parameter to control a power supply comprising a neutral phase module incorporating a circuit breaker, a line phase module incorporating a circuit breaker and means responsive to a first electric signal to trip the circuit breaker of the line phase module to interrupt the phase line and an electronics module incorporating means responsive to a second electric signal to produce a mechanical displacement, the modules being electrically and mechanically connected whereby the tripping of the line phase circuit breaker is mechanically transmitted to the neutral module and the electronics module and the mechanical displacement in the electronics module is mechanically transmitted to the neutral module and the phase module to interrupt the neutral and phase lines connected thereto.

Preferably, the means responsive to a first electric signal responds to an excess of current in the phase line to break the associated circuit.

With advantage, the electronics module incorporates means for comparing an input signal with a datum value to generate a difference signal as said second electric signal.

The apparatus may incorporate a stored energy device responsive to the second electric signal to produce the mechanical displacement.

Desirably, the apparatus includes actuating means operable in response to a control signal selectively to open or close the circuit breaker of the or each line phase module and the neutral module.

Embodiments of the invention will now be described by way of example, reference being made to the accompanying drawings, in which:-

Figure 1 is a view illustrating a line phase module incorporating a circuit breaker and associated with a remote control reset mechanism;

Figure 2 is a plan view illustrating a control unit composed of a line phase module between and electrically and mechanically connected to a neutral module and an electronics module;

Figure 3 is an end view of the unit shown in Figs. 1 and 2;

Figure 4 is a view of a control unit composed of three line phase modules sandwiched between a neutral module and an electronics module and illustrating the electrical and mechanical connection between the modules;

Figure 5 is an enlarged fragmentary view of a mechanical energy storage device within an electronics module;

Figure 5A is a view of the mechanical energy storage device shown in Fig. 5 mounted in the electronics module and showing the tripped condition;

Figure 6 illustrates the use of control units according to the invention for remotely achieving a star-delta start on an electric motor; and

Figure 7 illustrates a plurality of control units according to the present invention being used to control a plurality of systems.

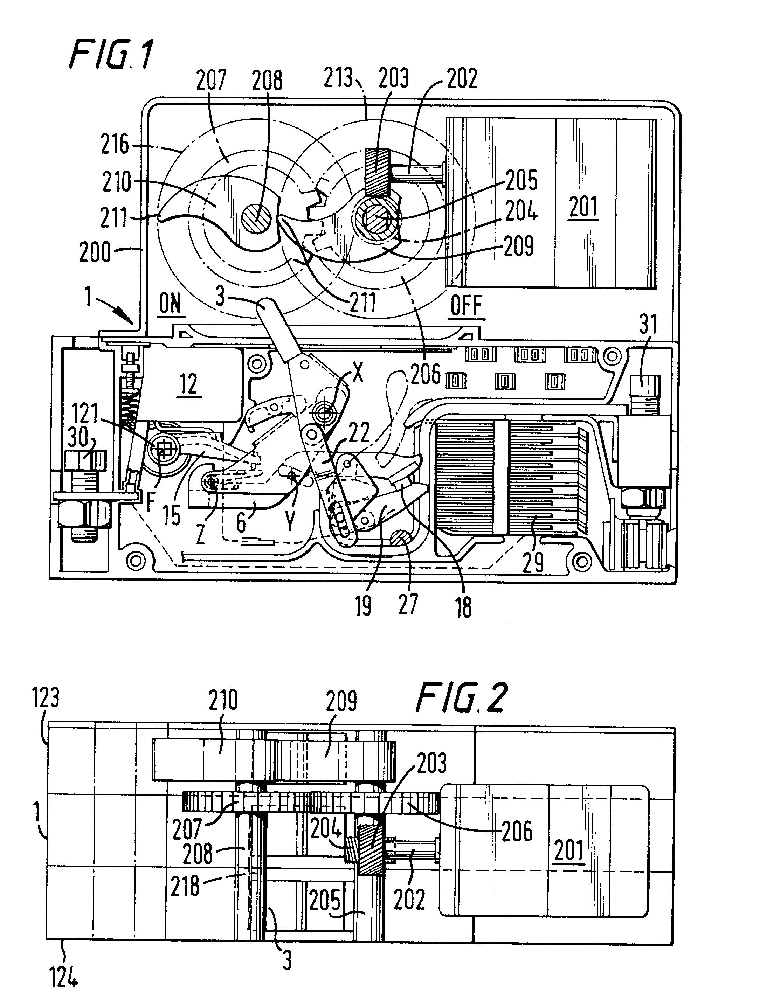

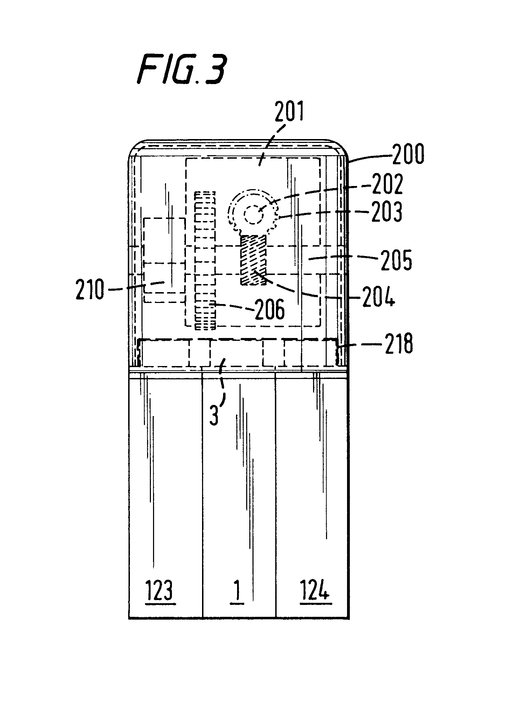

The control unit illustrated in Figs. 1, 2 and 3 is described in our co-pending patent applications Nos. filed (Agent's Ref: 32817/32818) and the disclosure thereof is incorporated herein by reference, like reference numerals being used to denote like parts.

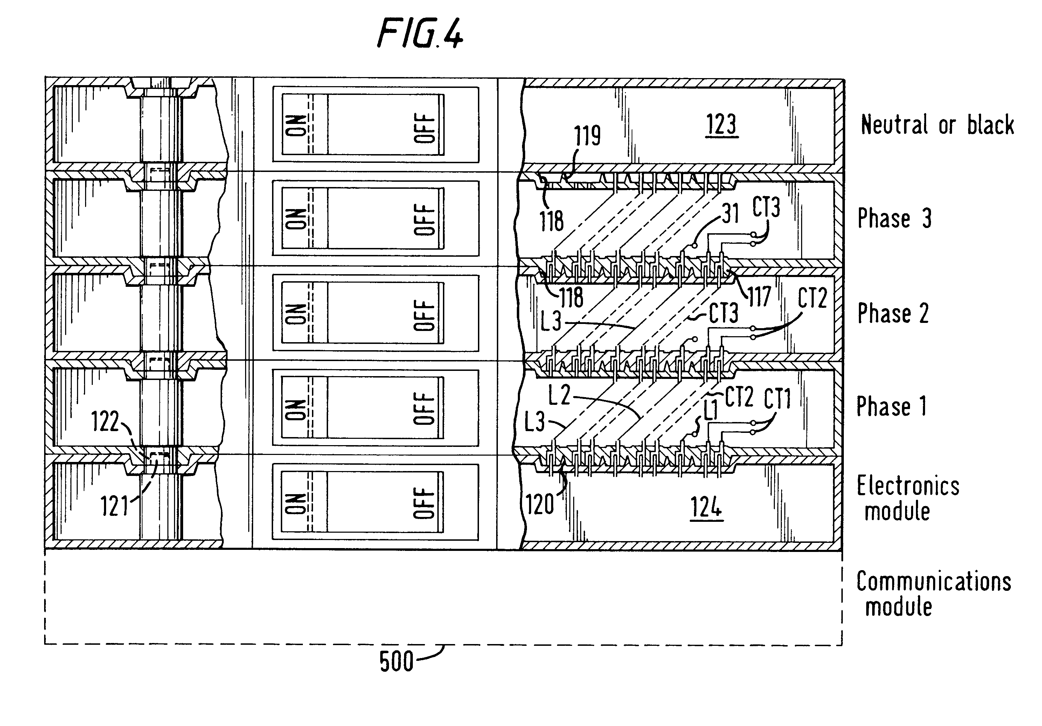

The control unit illustrated in Fig. 4 is described in our co-pending GB patent application No. 90 11804.3 filed 25th May 1990 and co-pending application No. filed (Agents' Ref: 32816) and the disclosure of that patent application is incorporated herein by reference, like reference numerals being used to denote like parts. A communications module 300 is added as shown in dotted lines and a motor driving contra-rotating actuating arms would be provided as in Fig. 1 although not shown in Fig. 4 and would actuate the dollies 3 of the line phase modules 1, the neutral module 123 and the electronics module 124.

The line phase modules 1 are circuit breakers such as described in our co-pending GB patent application No. 90 02678.2 filed 7th February 1990 and application No. filed (Agents' Ref: 32813) the disclosure of which is incorporated herein by reference and like reference numerals are used to denote like parts. Such a circuit breaker need not necessarily be employed for the purpose of the control apparatus of the present invention but it has certain advantages which are outlined in the patent application referred to. The line phase circuit breakers 1 are preferably identical for economy of manufacture and should readily be electrically and mechanically connected one to the other so that rotation of the trip lever 15 of one is transmitted to the others and to the neutral phase module, in this case by the pivots F and connected keys and key ways 121 and 122 as can be seen in Fig. 4. The neutral module 123 is substantially the same as a line phase module but has no solenoid 12 although it does have the key and key way 121 and 122 so that it will be switched with the line phase modules. It is an advantage for the contacts of the neutral module 123 to open after those of the line phase modules and this can be achieved by allowing a slight degree of torsion or play in the connection of the key 121 and key way 122 and in connecting shaft.

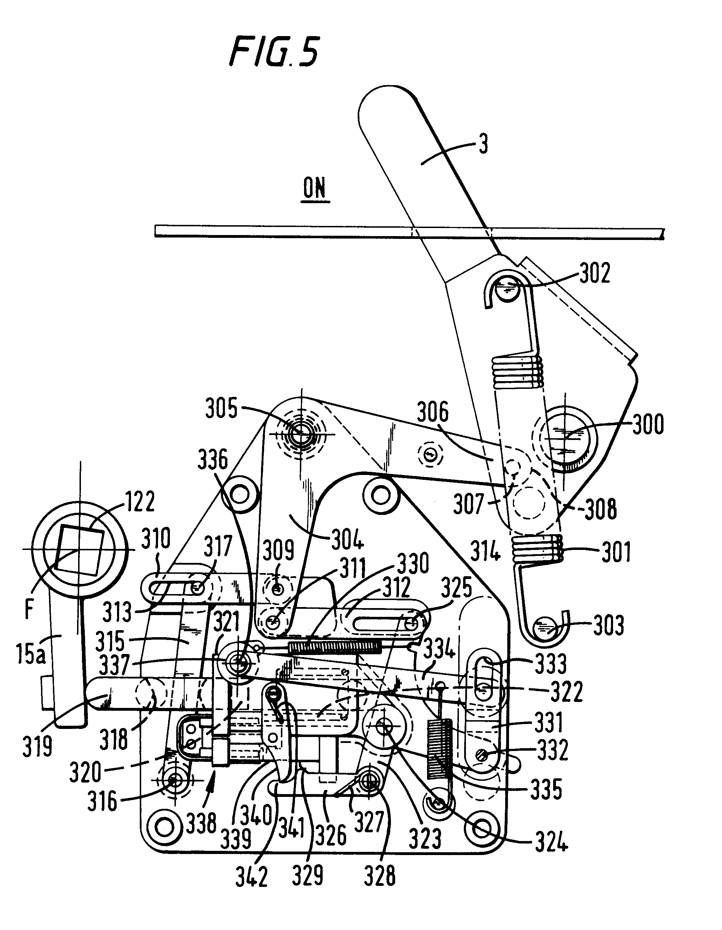

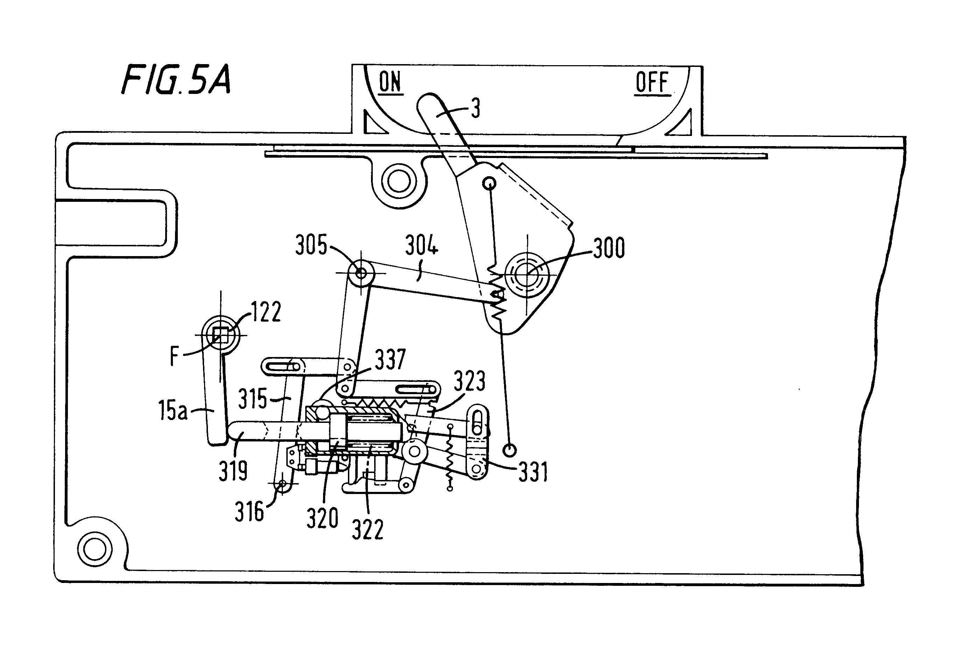

As can be seen in Fig. 4, the electronics module 124 also has a key 121 which mates with the key way of the adjacent line phase module and this key is connected to a trip lever 15a (Fig. 5) corresponding to the trip lever 15 of the line phase modules. The electronics module 124 incorporates a stored energy device which is shown in Fig. 5 and which can be triggered to actuate the associated trip lever 15a and so actuate the trip levers 15 of the line phase modules and the neutral module. Such a stored energy device can be electrical or mechanical but in this example is mechanical and corresponds to that described in our co-pending patent application No. filed (Agent's Ref: 32823).

The control unit has means for actuating the dollies 3 of the modules in response to a command signal. In this example this comprises a motor 201 driving contra-rotating arms 209 and 210 and is as described in our co-pending patent application No. filed (Agent's Ref: 32818) and as illustrated in Figs. 1 to 3 of the accompanying drawings. Such an actuating means would also be employed with the control unit shown in Fig. 4 which has these line phase modules. The dollies 3 of the line phase modules 1, the neutral module 123 and the electronics module 124 are strapped or linked together and are actuated together either by the actuating arms 209 and 210 engaging the strap 218 or manually.

It will be observed from Fig. 4 that the electrical inputs to the phase modules are transmitted to the electronics module 124 which is intended to process or respond to these inputs in a predetermined manner which can vary from application to application and for which its circuitry would be appropriately tailored.

The control unit therefore comprises one or more phase module circuit breakers connected in a phase line of a power supply and operable instinctively to an event to interrupt the supply of power along that line. The event, quite probably, would be a short-circuit, i.e. the line being somehow connected to earth and resulting in a large current which would actuate the solenoid 12, trip the lever 15 and actuate the other phase modules (if any), the neutral module and the electronics unit. For safety reasons such a switching action would need to be accomplished in about 3 milli-seconds. In this sense, the control unit acts as a protection device. It is also intended to operate as a control device which responds to measured values by determining when the measure or instantaneous value of a parameter departs from datum value by a predetermined amount and releasing the stored energy to trip the lever 315a and actuate the circuit breakers in the or each phase module and the neutral module to the open condition in which power is cut off.

The current transformers in the phase modules could monitor current and voltage and hence power and also phase, all such signals being passed to the electronics unit for processing.

The control unit also has means for resetting the modules once they have been triggered, i.e. the motor 201 and the actuating arms 209 and 210 which can move the dollies 3 from the "ON" to the "OFF" position and also from the "OFF" position to the "ON" position. It will be noted that once the stored energy in the electronics unit is released, the stored energy unit is re-charged by the movement of the dolly 3 from the "ON" to the "OFF" position.

A control unit according to the present invention being relatively easy to manufacture and assemble has application in many control systems.

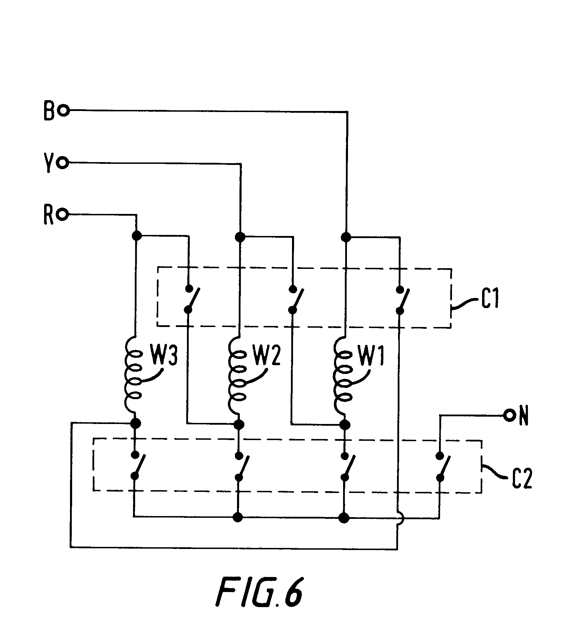

Fig. 6 illustrates how two control units C1 and C2 can be used for the star-delta starting up of a 3-phase motor. For this purpose the control unit C1 would not need a neutral module. The phase lines are identified as B, Y and R and are connected to one side of the respective windings W1, W2 and W3 and to one side of the respective circuit breakers in the phase modules of unit C1, the other side of these circuit breakers being connected through circuit breakers in the phase modules of unit C2 to a common line connected through the circuit breaker of the neutral module of C2 to the neutral line.

Initially, the circuit breakers of units C1 and C2 are both open. In order to start the motor the circuit breakers in unit C1 are closed in, this starts the motor in the delta connection. After a delay of about 5 seconds, the electronic module of C1 releases the stored energy and trips the associated circuit breakers to the open condition whilst at the same time instructing the motor 201 of unit C2 to close the associated circuit breakers to achieve a star connection.

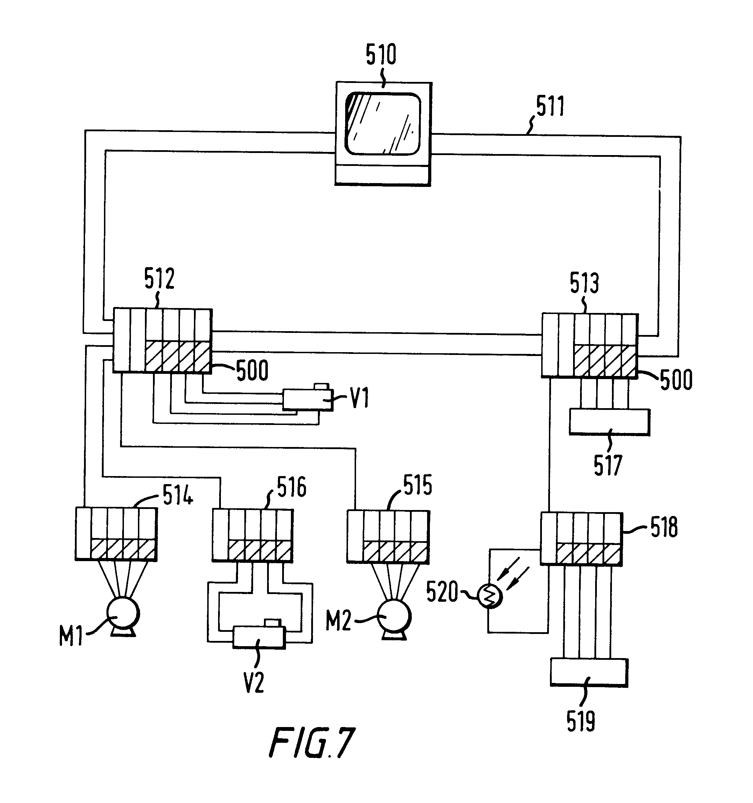

Fig. 7 illustrates a more sophisticated control system embodying several control units of the invention.

A computer 510 is connected to a data transmission path or bus bar 511 to control units 512 and 513 which include communications units 500 so that the units 512 and 513 can send information to and receive information or instructions from the computer 510. The control unit 512 is controlling and monitoring the operation of two motors M1 and M2 and a valve V2 by the connection between its communication module 500 and the electronics modules of control units 514 and 515 associated with the motors M1 and M2 and the electronics module of the control unit 516 associated with the valve V2. The control unit 512 is itself controlling amd monitoring the operation of a valve V1.

The control unit 513 is controlling the heating of a building represented by box 517 and through slave control unit 518 the lighting represented by box 519. The control unit 518 may be arranged to respond to ambient light to which a photocell 520 is exposed or to definite instructions from the control unit 513.

It will be appreciated that the control unit 518 could be replaced by a number of units each controlling the lighting on a separate floor of a multi-storey building so that, in the event of a fault or short circuit, only one floor need be isolated until the problem is corrected. In such an event possibly only a single phase module in each phase unit might be required.

It will also be appreciated that the inclusion of a communications unit adds an extra dimension to the control unit as it allows it to communicate with a computer so that instructions and information may pass between them and be up-dated and recorded as required. The parameters to which the control units are exposed and which it may measure or compare are generally of analogue form and hence not suitable for transmitting to the computer. Some form of digitising means is required and can be located in the electronics unit or the communications module. Any known form of analogue/digital converter would suffice. Also some form of conversion of the digitised data to the language of the computer would be required but such a conversion system is readily available.

The present invention enables an electrical supply to be controlled to provide a management system from a number of modules which are readily electrically and mechanically connected.

A large number of systems can be envisaged which could be managed by a control apparatus of the present invention. As the electronics unit can be arranged to monitor both current and voltage, it can monitor electrical power and can be made to respond to an excess of power consumption in, say, a building, a group of buildings or even a single consumer unit. It can be made to respond to ambient light to control the lighting power available according to need and to control the site at which that power is made available. It can monitor the operation of a motor by having the phase unit or units available to respond to a short-circuit and having the electronics unit monitor the temperature of the windings in case these should get too hot.

Broadly stated, the control unit can be arranged to manage any process control system. The phase module or modules proving protection against faults on the line or lines, the electronics unit monitoring one or more predetermined parameters and the actuating mechanism being operable remotely on command to switch the unit on or off as required.

## Claims

1. An electrical control apparatus operable to respond to an external parameter to control a power supply comprising a neutral phase module incorporating a circuit breaker, a line phase module incorporating a circuit breaker and means responsive to a first electric signal to trip the circuit breaker of the line phase module to interrupt the phase line and an electronics module incorporating means responsive to a second electric signal to produce a mechanical displacement, the modules being electrically and mechanically connected whereby the tripping of the line phase circuit breaker is mechanically transmitted to the neutral module and the electronics module and the mechanical displacement in the electronics module is mechanically transmitted to the neutral module and the phase module to interrupt the neutral and phase lines connected thereto.

2. An electrical control apparatus according to claim 1 in which the means responsive to a first electric signal responds to an excess of current in the phase line to break the associated circuit.

3. An electrical control apparatus according to claim 1 or 2 incorporating a plurality of similar line phase modules responsive to separate first electric signals to interrupt an associated phase line and mechanically and electrically connected to each other, the neutral module and the electronics module.

4. An electrical control apparatus according to any one of the preceding claims in which the electronics module incorporates means for comparing an input signal with a datum value to generate a difference signal as said second electric signal.

5. An electrical control apparatus according to claim 4 in which the electronics module incorporates means for comparing a plurality of input signals with separate associated datum values to generate separate associated difference signals as said second electric signal when any one of said input signals departs from the associated datum value by a predetermined amount.

6. An electrical control apparatus according to claim 5 including digitising means operable to represent the or each input signal in digital form.

7. An electrical control apparatus according to claim 6 including means for supplying the or each digitised signal to an electrically conducting path for further processing.

8. An electrical control apparatus according to claim 7 in which the digitising means is operable to supply the or each digitised signal to the electrically conducting path in accordance with predetermined requirements embodied in a command signal to which the digitising means responds.

9. An electrical control apparatus according to claim 1, 2 or 3 in which the electronics module incorporated a stored energy device responsive to the second electric signal to produce the mechanical displacement.

10. An electrical control apparatus according to any one of the preceding claims including actuating means operable in response to a control signal selectively to open or close the circuit breaker of the or each line phase module and the neutral module.

11. An electrical control apparatus according to claim 10 in which the means responsive to the control signal includes a motor operable to contra-rotate a pair of actuating arms in response to the control signal.

12. An electrical control apparatus according to claim 9 and either one of claims 10 and 11 in which the actuating means is operable to recharge the stored energy device.

13. An electrical control apparatus according to any one of the preceding claims including a communications module electrically connected to the electronics module and operable to communicate a measurement signal or a signal which is a function of such measurement signal to an external information processor unit.

14. An electrical control apparatus according to claim 13 in which the communications module communicates such a measurement signal or a signal which is a function of such measurement signal in digitised form.

15. An electrical control apparatus according to claim 14 in which the communications module is responsive to an instruct signal to communicate the measurement signal or the signal which is a function of the measurement signal as a function of said instruct signal.

16. A control system having an information processor unit and at least one control apparatus according to claim 13 with the communications module operable to communicate a measurement signal to the processor unit.

*FIG.1*

*FIG.2*

# FIG.3

FIG.4

# FIG.5

ON

FIG.5A

FIG.6

*FIG.7*

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | FR-A-2 574 218   (MERLIN GERIN) <br> * the whole document * <br> – – – | 1-8,13-16 | H 01 H 71/00 <br> H 01 H 83/20 |
| Y | EP-A-0 196 241   (MERLIN GERIN) <br> * the whole document * <br> – – – | 1-8,13-16 | |
| A | DE-A-3 446 021   (SIEMENS) <br> – – – | | |
| A | GB-A-1 599 040   (DORMAN SMITH SWITCHGEAR) <br> – – – – – | | |

**TECHNICAL FIELDS SEARCHED (Int. Cl.5)**

H 01 H

The present search report has been drawn up for all claims

| Place of search | Date of completion of search | Examiner |
|---|---|---|
| The Hague | 02 July 91 | OVERDIJK J. |

CATEGORY OF CITED DOCUMENTS

X : particularly relevant if taken alone
Y : particularly relevant if combined with another
document of the same catagory
A : technological background
O : non-written disclosure
P : intermediate document
T : theory or principle underlying the invention

E : earlier patent document, but published on, or after
the filing date
D : document cited in the application
L : document cited for other reasons

&: member of the same patent family, corresponding
document